# EUROPEAN PATENT SPECIFICATION

(11) **EP 2 559 539 B1**
(45) Date of publication and mention of the grant of the patent: **10.10.2018**
(21) Application number: 11768779.8
(22) Date of filing: 07.04.2011
(51) Int. Cl.: B29C 43/24, B29C 43/46, B29L 7/00

(54) **CALENDER FOR TESTING**
KALENDER FÜR TESTZWECKE
CALANDRE À DES FINS D'ESSAI

(30) Priority: 13.04.2010 JP 2010092487
(43) Date of publication of application: 20.02.2013
(73) Proprietor: IHI Corporation, Tokyo 135-8710 (JP); IHI Logistics & Machinery Corporation, Koto-ku Tokyo 135-0061 (JP)
(72) Inventor: IMAIZUMI, Hiroaki, Tokyo 135-8710 (JP); MAEDA, Hirotomo, Tokyo 1080075 (JP)
(74) Representative: Grünecker Patent- und Rechtsanwälte PartG mbB
(86) International application number: PCT/JP2011/058790
(87) International publication number: WO 2011/129258

(56) References cited:
- JP-A- H09 226 005
- JP-A- H11 232 824
- JP-A- 2007 055 036
- JP-A- 2008 296 592
- JP-B2- 3 293 183
- US-A- 3 581 340
- US-A- 4 408 974

## Description

### Technical Field

The present invention relates to a calender which forms a resin film from a thermoplastic resin material such as plastic or rubber, and particularly, relates to a calender for testing for performing some tests in each stage according to development steps of a resin and a film forming.

### Background Art

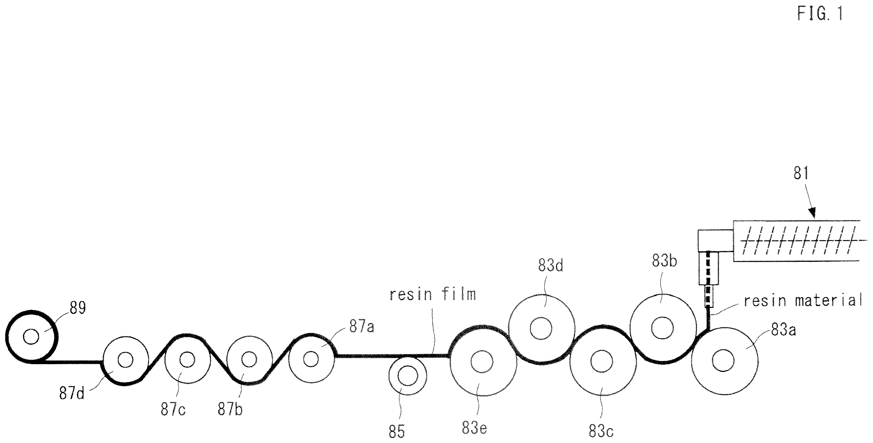

As illustrated in Fig. 1, a calender includes a continuous kneader 81, a plurality of (five in example of Fig. 1) rolling rolls 83a, 83b, 83c, 83d, and 83e, a take-off roll 85, a plurality of (four in example of Fig. 1) cooling rolls 87a, 87b, 87c, and 87d, a winding roll 89, and the like.

A molten resin material is supplied to the continuous kneader 81. The resin material is kneaded by the continuous kneader 81 and supplied between a first rolling roll 83a and a second rolling roll 83b. Thereafter, the resin material is rolled between the first and the second rolling rolls 83a and 83b, subsequently, is rolled between the second rolling roll 83b and a third rolling roll 83c, is rolled between the third rolling roll 83c and a fourth rolling roll 83d, is rolled between the fourth rolling roll 83d and a fifth rolling roll 83e, and is formed a resin film. The resin film is separated from the fifth rolling roll 83e by the take-off roll 85 and is transferred to first to fourth cooling rolls 87a, 87b, 87c, and 87d. In the first to the fourth cooling rolls 87a, 87b, 87c, and 87d, the resin film passing through the cooling rolls is cooled by a cooling medium which flows inside of the cooling rolls. The resin film which is cooled in this way is wound around the winding roll 89.

For example, the above-described calender is described in Patent Literatures 1 and 2 below.

### Citation List

### Patent Literature

PTL 1: Japanese Patent No. 2781836
PTL 2: Japanese Patent No. 3968879
US 3 581 340 A relates to drawing of calenders in webs of foil or film production. JP H09 226005 A relates to calendar equipment. US 4 408 974 A relates to a mobile film stretching unit.

### Summary of Invention

### Technical Problem

In a case where a new film product is developed using a new resin material, a calendering test (rolling and film forming), an embossing test, an extrusion test (T-die film forming), a polishing test (two-roll rolling), a lamination layer test, a laminate test, and an annealing test need to be performed.

Moreover, in a case where a new film product is developed using a new resin material, for example, the tests need to be preformed according to the following steps.
(1) First Step: Discharge Test from Extruder (Relationship Verification of Resin Viscosity, Discharge Temperature, and Discharge Quantity)
(2) Second Step: Detachment Test from Roll (Detachability Verification)
(3) Third Step: Rolling Test (Verification of Temperature Condition, Surface Nature, Detachment strength, Swell Ratio, Elongation Percentage, or the like)
(4) Fourth Step: Sheeting Test (Verification of Thickness, Surface Nature, Performance, or the like)
(5) Fifth Step: Commercialization Test (Performance Verification as Product having Additional Function such as Annealing, Surface Reforming, or the like)

However, in the above-described calender in the related art, each of the tests is not able to be performed individually, and thereby, the entire device having a large size needs to be operated, and a large amount of test material is also required.

An object of the present invention is to provide a calender for testing capable of individually performing a plurality of tests for developing a new film product using a new resin material using a small amount of test materials.

### Solution to Problem

According to the present invention, there is provided a calender according to claim 1.

According to an embodiment of the present invention, the calender for testing further includes an embossing module which applies a pattern to the resin film,
a trimming module which cuts off an end of the resin film, or
an annealing module which removes distortion of the resin film,
wherein each frame of the embossing module, the trimming module, and the annealing module is fixed so as to move on and to be attached to and detached from the upper surface of the base module along the common rail.

Moreover, the calender for testing further includes a T-die which is directly and detachably fixed to a front side surface of a frame of the extrusion module and supplies the kneaded resin material downward.

In addition, the calender for testing further includes an unwinding module which is directly and detachably fixed to a front side surface of the frame of the main body module and unwinds a second resin film to the main body module.

Moreover, each of the modules includes respective direct drive units which are directly mounted to the respective frames.

### Advantageous Effects of the Invention

According to the configuration of the present invention described above, since the cooling module and the winder module are able to move along the common rail on the upper surface of the base module, the disposition is easily changed, and a line configuration is able to be changed freely according to the use.

In addition, since the two-roll module and the take-off module are directly and detachably fixed to the main body module, the modules are able to be used in the state of being removed as necessary, and the size of the entire device at the time of the test is able to be decreased.

Accordingly, it is possible to individually perform a plurality of tests for developing a new film product using a new resin material using a small amount of test materials.

### Brief Description of Drawings

an unwinding module which is directly and detachably fixed to a front side surface of the main body module and unwinds a second resin film to the main body module.

Moreover, each of the modules includes respective frames and respective direct drive units which are directly mounted to the frames.

### Advantageous Effects of the Invention

According to the configuration of the present invention described above, since the cooling module and the winder module are able to move along the common rail on the upper surface of the base module, the disposition is easily changed, and a line configuration is able to be changed freely according to the use.

In addition, since the two-roll module and the take-off module are directly and detachably fixed to the main body module, the modules are able to be used in the state of being removed as necessary, and the size of the entire device at the time of the test is able to be decreased.

Accordingly, it is possible to individually perform a plurality of tests for developing a new film product using a new resin material using a small amount of test materials.

### Brief Description of Drawings

Fig. 1 illustrates a configuration of a calender of the related art.
Fig. 2 is a view of a calender for testing according to a first embodiment.
Fig. 3 is a view of a calender for testing according to a second embodiment.
Fig. 4 is a view of a calender for testing according to a third embodiment.
Fig. 5 is a configuration diagram of a test device using some modules according to the present embodiment.

### Description of Embodiments

Preferred embodiments of the present invention will be described with reference to drawings. Moreover, in the drawings, the common portions are denoted by the same reference numerals, and the overlapping descriptions are omitted.

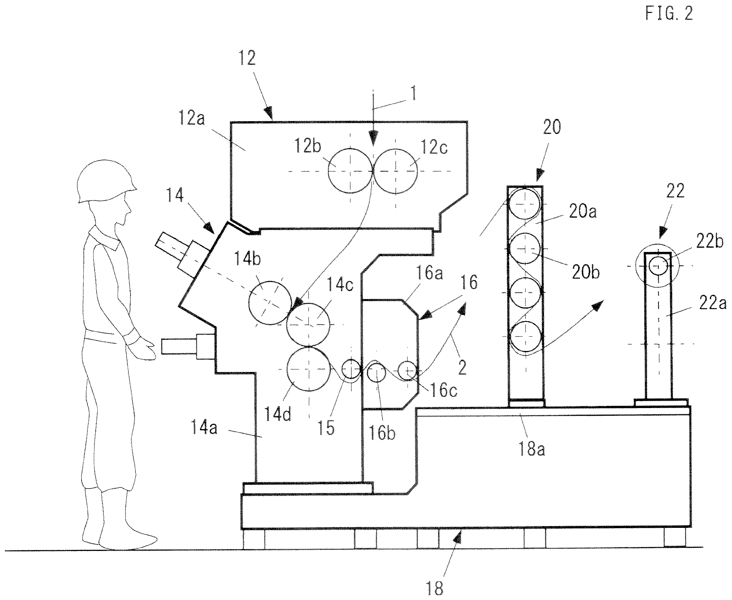

Fig. 2 is a view of a calender for testing according to a first embodiment.

In Fig. 2, the calender for testing according to the first embodiment includes a two-roll module 12, a main body module 14, a take-off module 16, a base module 18, a cooling module 20, and a winder module 22.

The modules 12, 14, 16, 20, and 22 include each of frames 12a, 14a, 16a, 20a, and 22a, and a direct drive unit (not shown) which is directly mounted to each of the frames 12a, 14a, 16a, 20a, and 22a respectively.

Moreover, the two-roll module 12 is directly and detachably fixed to an upper surface (upper side in Fig. 2) of the main body module 14, and the take-off module 16 is directly and detachably fixed to a rear side surface (right side in Fig. 2) of the main body module 14.

For example, the take-off module 16 may be positioned by a key, a pin, centering location, fitting, or the like, and detachably fixed by a bolt and a nut.

The two-roll module 12 includes two rolls 12b and 12c which roll or mix a resin material 1.

In this example, each of two rolls 12b and 12c is driven to rotate around the respective axes by the direct drive unit (not shown). The resin material 1 is supplied between two rolls 12b and 12c from the upside, and the resin material 1 is pressurized and rolled between two rolls 12b and 12c.

Moreover, two rolls 12b and 12c may mix the resin material 1 between two rolls.

The main body module 14 includes three rolls 14b, 14c, and 14d which roll the resin material 1.

In this example, each of three rolls 14b, 14c, and 14d is driven to rotate around the respective axes by the direct drive unit (not shown). The resin material 1 is transferred between the rolls 14b and 14c from the two-roll module 12, the resin material 1 is rolled between the rolls 14b and 14c, and subsequently, the resin material is rolled between the rolls 14c and 14d. The resin material 1 passing through the main body module 14 is formed in a film shape by three rolls 14b, 14c, and 14d. In the present invention, the resin material having a film shape is referred to as a resin film 2.

Moreover, a guide roller 15 which guides the resin film 2 to the take-off rolls 16b and 16c is provided at the rear of the main body module 14. The guide roller 15 may be a free roller which freely rotates around the axis.

The take-off module 16 includes take-off rolls 16b and 16c which separate the resin film 2 from the main body module 14.

The take-off rolls 16b and 16c are able to rotate around the respective axes, and have a function separating the resin film 2 from the roll 14d of the main body module 14. The take-off rolls 16b and 16c are a driving roller which is driven to rotate by a driving device (not shown). However, the take-off rolls may be a free roller which freely rotates around the axis.

The base module 18 is directly and detachably fixed the main body module 14 on the upper surface, and includes a common rail 18a which horizontally extends to the rear.

The common rail 18a is a horizontal rail which is perpendicular to shaft centers of the rolls 14b, 14c, and 14d. For example, the common rail 18a includes a V groove in a portion thereof and is able to accurately position a width direction position of the main body module 14.

For example, the main body module 14 may be positioned by a key, a pin, centering location, fitting, or the like, and detachably fixed by a bolt and a nut.

The cooling module 20 and the winder module 22 are fixed so as to move on and to be attached to and detached from the upper surface of the base module 18 along the common rail 18a.

For example, the fixing means may grip a leg portion (not shown) of the cooling module 20 or the winder module 22 which is positioned on the upper surface of the base module 18 by a gripping member which is fixed to the upper surface of the base module 18 by a bolt or the like. In this case, by loosening the bolt or the like, the cooling module 20 or the winder module 22 is able to freely move along the common rail 18a and is able to be fixed at an arbitrary position by the gripping member.

The cooling module 20 cools the resin film 2 at the rear of the main body module 14.

The cooling module 20 includes a plurality of (four in this example) cooling rolls 20b, and each of the cooling rolls 20b is driven to rotate and is cooled by a cooling medium which flows inside. Each of the cooling rolls cools the resin film by contacting the resin film 2 transferred from the take-off module 16.

The winder module 22 winds the resin film 2 at the rear of the cooling module 20.

The winder module 22 includes a winder roll 22b which is driven to rotate about the shaft center and winds the resin film 2 transferred from the cooling module 20.

According to the calender for testing having the above-described configuration, a test which combines the two-roll module 12, the main body module 14, the take-off module 16, the base module 18, the cooling module 20, and the winder module 22 is able to be performed.

Moreover, in this case, since the cooling module 20 and the winder module 22 are able to move along the common rail 18a on the upper surface of the base module 18, the disposition is easily changed, and a line configuration is able to be changed freely according to the use.

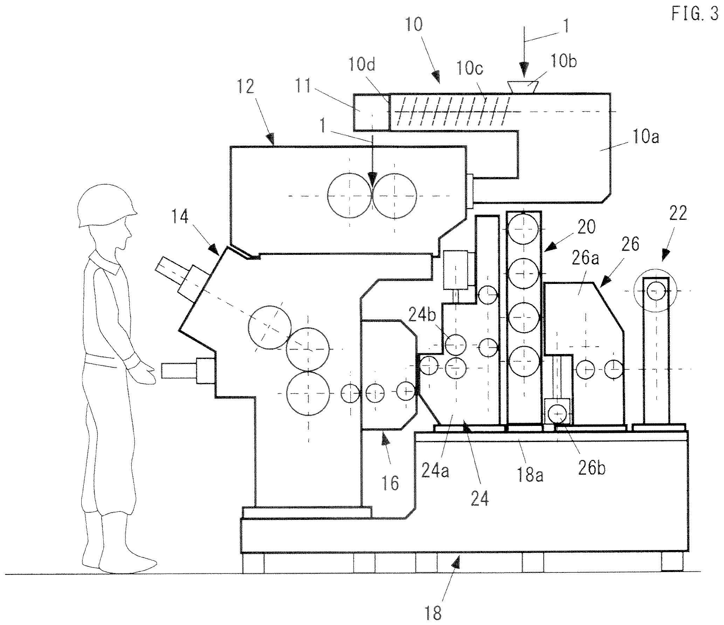

Fig. 3 is a view of a calender for testing according to a second embodiment.

In Fig. 3, the calender for testing according to the second embodiment further includes an extrusion module 10, a T-die 11, an embossing module 24, and a trimming module 26.

A frame 10a of the extrusion module 10 is directly and detachably fixed to the rear side surface (right side in Fig. 3) of the frame 12a of the two-roll module 12, and the extrusion module 10 kneads and extrudes the resin material 1.

The extrusion module 10 includes a resin supply port 10b to which the resin material is supplied, a screw 10c which is provided in the inner space of the extrusion module, and a resin discharge port 10d. The resin material 1 is supplied to the resin supply port 10b, the resin material 1 is kneaded and mixed while being transferred from the rear side to the front side by the screw 10c, and the resin material is discharged from the resin discharge port 10d.

In this case, the screw 10c in which a shaft extends from the rear side (right side in Fig. 3) to the front side is rotated around the axis by a direct drive unit (not shown), and therefore, the resin material passes between spiral grooves which form the screw 10c and is transferred from the rear side to the front side.

The T-die 11 is directly and detachably fixed to the front side surface of the extrusion module 10 and supplies the kneaded resin material 1 downward.

For example, the extrusion module 10 and the T-die 11 may be positioned by a key, a pin, centering location, fitting, or the like, and detachably fixed by a bolt and a nut.

A frame 24a of the embossing module 24 and a frame 26a of the trimming module 26 each are fixed so as to move on and to be attached to and detached from the upper surface of the base module 18 along the common rail 18a. Similar to the cooling module 20 and the winder module 22, the fixing means is able to freely move along the common rail 18a and is able to be fixed at an arbitrary position by the gripping member.

The embossing module 24 includes an embossing roll 24b which is driven to rotate, and applies a pattern to one surface or both surfaces of the resin film 2.

The trimming module 26 includes a trimming pinch roll 26b which is driven to rotate, and cuts off an end of the resin film 2.

According to the calender for testing having the above-described configuration, in addition to the configuration of Fig. 2, a test which combines the extrusion module 10, the T-die 11, the embossing module 24, and the trimming module 26 is able to be performed.

Moreover, in this case, since the cooling module 20, the winder module 22, the embossing module 24, and the trimming module 26 are able to move along the common rail 18a on the upper surface of the base module 18, the disposition is easily changed, and a line configuration is able to be changed freely according to the use.

Moreover, since the configuration is able to be used while removing the T-die 11, necessity of the T-die 11 is able to be tested.

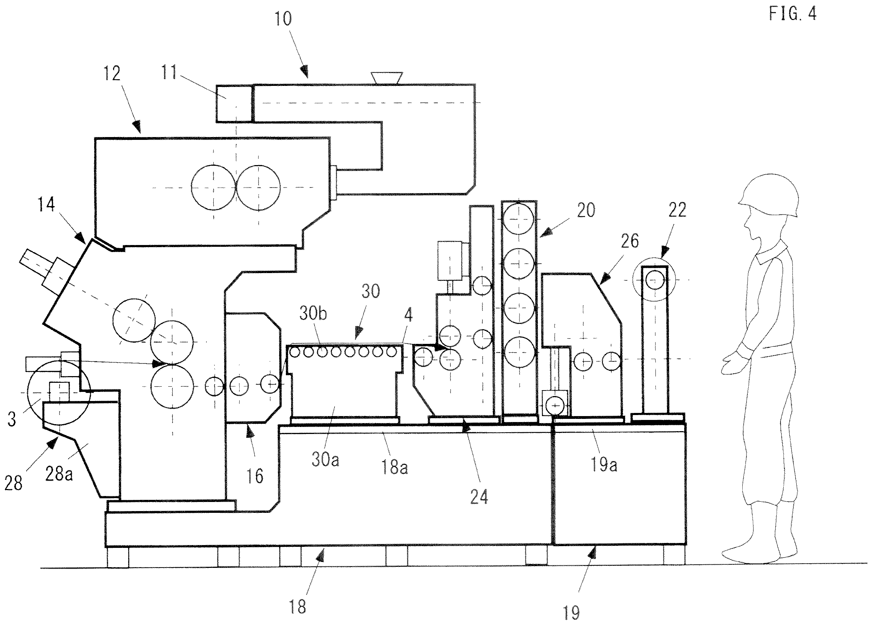

Fig. 4 is a view of a calender for testing according to a third embodiment.

In Fig. 4, the calender for testing according to the third embodiment further includes an extension base 19, an unwinding module 28, and an annealing module 30.

The extension base 19 is directly and detachably fixed to the rear side surface (right side in Fig. 4) of the base module 18. For example, the extension base 19 may be positioned by a key, a pin, centering location, fitting, or the like, and detachably fixed by a bolt and a nut.

Moreover, the extension base 19 includes a common rail 19a which horizontally extends to the rear side on the upper surface of the extension base. The common rail 19a is configured so as to extend the common rail 18a.

Moreover, the base module 18 and the extension base 19 may be integrated, and in this case, the common rails 18a and 19a may be the same rail as each other.

A frame 28a of the unwinding module 28 is directly and detachably fixed to the front side surface of the frame 14a of the main body module 14, and the unwinding module 28 unwinds a second resin film 3 to the main body module 14.

For example, the unwinding module 28 may be positioned by a key, a pin, centering location, fitting, or the like, and detachably fixed by a bolt and a nut.

A frame 30a of the annealing module 30 is disposed between the take-off module 16 and the embossing module 24, and the annealing module removes distortion of the resin film.

The annealing module 30 includes a plurality of rolls 30b, and the distortion of the resin film is removed by warm air while the resin film is guided along the plurality of rolls.

In this case, the distortion of the resin film 2 or a laminate film 4 in which the second resin film 3 is laminated on the resin film 2 is removed.

According to the calender for testing having the above-described configuration, in addition to the configuration of Fig. 3, a test which combines the unwinding module 28 and the annealing module 30 is able to be performed.

Moreover, in this case, since the cooling module 20, the winder module 22, the embossing module 24, the trimming module 26, and the annealing module 30 are able to move along the common rails 18a and 19a on the upper surface of the base module 18, the disposition is easily changed, and a line configuration is able to be changed freely according to the use.

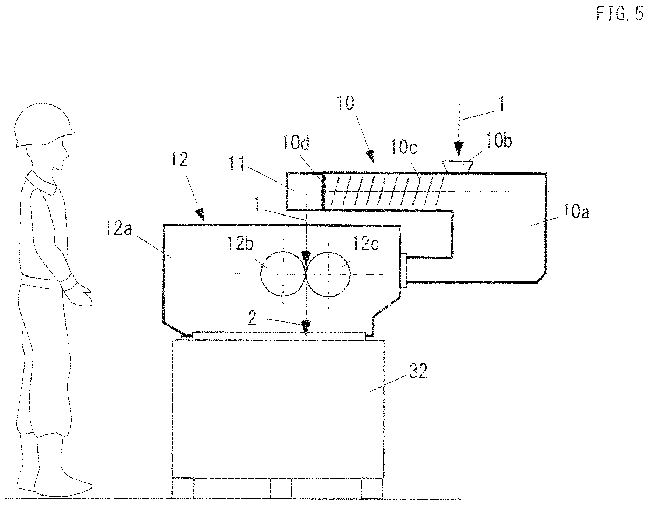

Fig. 5 is a configuration diagram of a test device using some modules according to the present embodiment.

In this test device, the above-described extrusion module 10, the T-die 11, and the two-roll module 12 are fixed to an upper portion of an auxiliary base 32.

According to the test device having this configuration, a single test or a combination test of the extrusion module 10, the T-die 11, and the two-roll module 12 is able to be performed.

According to the above-described configuration, since the take-off module 16, the cooling module 20, the winder module 22, the embossing module 24, the trimming module 26, and the annealing module 30 are able to move along the common rail on the upper surface of the base module 18, the disposition is easily changed to any order and intervals, and a line configuration is able to be changed freely according to the use.

In addition, since the two-roll module 12, the take-off module 16, and the unwinding module 28 are directly and detachably fixed to the main body module 14, the modules are able to be used in the state of being removed as necessary, and the size of the entire device at the time of the test is able to be decreased.

Accordingly, the calendering test (rolling and film forming), the embossing test, the extrusion test (T-die film forming), the polishing test (two-roll rolling), the lamination layer test, the laminate test, and the annealing test are able to be performed individually or in combination according to combination of the modules.

In addition, in a case where a new film product is developed using a new resin material, the needed tests are able to be performed individually using a small amount of test materials in each step.

### Description of Reference Numerals

1: resin material, 2: resin film
3: second resin film, 4: laminate film
10: extrusion module, 10a: frame, 10b: resin supply port
10c: screw, 10d: resin discharge port
11: T-die, 12: two-roll module
12a: frame, 12b and 12c: roll
14: main body module, 14a: frame
14b, 14c, and 14d: roll, 15: guide roller
16: take-off module, 16a: frame
16b, 16c: take-off roll
18: base module, 18a: common rail
19: extension base, 19a: common rail
20: cooling module, 20a: frame, 20b: cooling roll
22: winder module, 22a: frame, 22b: winder roll
24: embossing module, 24a: frame, 24b: embossing roll
26: trimming module, 26a: frame
26b: trimming pinch roll
28: unwinding roll, 28a: frame
30: annealing module, 30a: frame, 30b: roll
32: auxiliary base

## Claims

1. A calender for testing for forming a resin film (2) from a resin material (1), comprising:
a two-roll module (12) including two rolls for rolling or mixing the resin material (1);
a main body module (14) including three rolls for rolling the resin material (1);
a take-off module (16) including a take-off roll for separating the resin film (2) from the main body module (14),
**characterized in that**
a frame (12a) of the two-roll module (12) being directly and detachably fixed to an upper surface of a frame (14a) of the main body module (14), and
a frame (16a) of the take-off module (16) being directly and detachably fixed to a rear side surface of the frame (14a) of the main body module (14);
the calendar further comprising:
a base module (18) which directly and detachably fixes the main body module (14) on an upper surface and has a common rail (18a) horizontally extending to the rear of the base module (18);
a cooling module (20) for cooling the resin film (2) at the rear of the main body module (14);
a winder module (22) for winding the resin film (2) at the rear of the cooling module (20): and
an extrusion module (10) which is directly and detachably fixed to a rear side surface of the frame (12a) of the two-roll module (12) and kneads and extrudes the resin material (1),
wherein a frame (20a) of the cooling module (20) and a frame (22a) of the winder module (22) are fixed so as to move on and to be attached to and detached from an upper surface of the base module (18) along the common rail (18a).

2. The calender for testing according to claim 1, further comprising:
an embossing module (24) for applying a pattern to the resin film (2);
a trimming module (26) for cutting off an end of the resin film (2); or
an annealing module (30) for removing distortion of the resin film (2),
wherein each frame (24a, 26a, 30a) of the embossing module (24), the trimming module (26), and the annealing module (30) is fixed so as to move on and to be attached to and detached from the upper surface of the base module (18) along the common rail (18a).

3. The calender for testing according to claim 1, further comprising:
a T-die (11) which is directly and detachably fixed to a front side surface of a frame (10a) of the extrusion module (10) and configured to supply the kneaded resin material (1) downward.

4. The calender for testing according to claim 1, further comprising:
an unwinding module (28) which is directly and detachably fixed to a front side surface of the frame (14a) of the main body module (14) and configured to unwind a second resin film (2) to the main body module (14).

5. The calender for testing according to any one of claims 1 to 4,
wherein each of the modules (12, 14, 16, 20, 22) includes respective direct drive units which are directly mounted to the respective frames (12a, 14a, 16a, 20a, 22a).

## Patentansprüche

1. Kalander für Prüfzwecke zum Ausbilden eines Harzfilms (2) aus einem Harzmaterial (1), umfassend:
ein Zweiwalzenmodul (12), das zwei Walzen zum Walzen oder Mischen des Harzmaterials (1) umfasst;
ein Hauptkörpermodul (14), das drei Walzen zum Walzen des Harzmaterials (1) umfasst; und
ein Abnahmemodul (16), das eine Abnahmewalze zum Trennen des Harzfilmes (2) von dem Hauptkörpermodul (14) umfasst,
**dadurch gekennzeichnet, dass**
ein Rahmen (12a) des Zweiwalzenmoduls (12) direkt und lösbar an einer Oberseite eines Rahmens (14a) des Hauptkörpermoduls (14) fixiert ist, und
ein Rahmen (16a) des Abnahmemoduls (16) direkt und lösbar an einer Rückseitenfläche des Rahmens (14a) des Hauptkörpermoduls (14) fixiert ist;
wobei der Kalander weiterhin umfasst:
ein Basismodul (18), das direkt und lösbar das Hauptkörpermodul (14) auf einer Oberseite fixiert und eine gemeinsame Schiene (18a) hat, die sich horizontal zu der Rückseite des Basismoduls (18) erstreckt;
ein Kühlmodul (20) zum Kühlen des Harzfilms (2) an der Rückseite des Hauptkörpermoduls (14);
ein Wickelmodul (22) zum Aufwickeln des Harzfilms (2) auf der Rückseite des Kühlmoduls (20); und
ein Extrusionsmodul (10) das direkt und lösbar an einer Rückseitenfläche des Rahmens (12a) des Zweiwalzenmoduls (12) fixiert ist und das Harzmaterial (1) knetet und extrudiert,
wobei ein Rahmen (20a) des Kühlmoduls (20) und ein Rahmen (22a) des Wickelmoduls (22) derart fixiert sind, dass sie sich auf einer Oberseite des Basismoduls (18) entlang der gemeinsamen Schiene (18a) bewegen und auf dieser angebracht und von dieser gelöst werden können.

2. Kalander für Prüfzwecke nach Anspruch 1, weiterhin umfassend:
ein Prägemodul (24) zum Aufbringen eines Musters an dem Harzfilm (2);
ein Ablängmodul (26) zum Abschneiden eines Endes des Harzfilms (2); oder
ein Anlassmodul (30) zum Entfernen einer Verzerrung in dem Harzfilm (2),
wobei jeder Rahmen (24a, 26a, 30a) des Prägemoduls (24), des Ablängmoduls (26) und des Anlassmoduls (30) derart ist, dass ses sich auf einer Oberseite des Basismoduls (18) entlang der gemeinsamen Schiene (18a) bewegt und auf dieser angebracht und von dieser gelöst werden kann.

3. Kalander für Prüfzwecke nach Anspruch 1, weiterhin umfassend:
eine T-Düse (11), die direkt und lösbar an einer Vorderseitenfläche eines Rahmens (10a) des Extrusionsmoduls (10) angebracht und dazu eingerichtet ist, das geknetete Harzmaterial (1) nach unten zuzuführen.

4. Kalander für Prüfzwecke nach Anspruch 1, weiterhin umfassend:
ein Abwickelmodul (28), das direkt und lösbar an einer Vorderseitenfläche des Rahmens (14a) des Hauptkörpermoduls (14) fixiert und dazu eingerichtet ist, einen zweiten Harzfilm (2) für das Hauptkörpermodul (14) abzuwickeln.

5. Kalander für Prüfzwecke nach einem der Ansprüche 1 bis 4,
bei dem jedes der Module (12, 14, 16, 20, 22) jeweilige Direktantriebseinheiten umfasst, die direkt an den jeweiligen Rahmen (12a, 14, 16, 20a, 22a) angebracht sind.

## Revendications

1. Calandre d'essai pour former un film de résine (2) à partir d'un matériau résineux (1), comprenant :
un module à deux rouleaux (12) comportant deux rouleaux pour rouler ou mélanger le matériau résineux (1) ;
un module de corps principal (14) comprenant trois rouleaux pour rouler le matériau résineux (1);
un module détachable (16) comprenant un rouleau de détachage pour séparer le film de résine (2) du module de corps principal (14),
**caractérisée en ce que**
un châssis (12a) du module à deux rouleaux (12) est fixé de manière directe et détachable à une surface supérieure d'un châssis (14a) du module de corps principal (14), et
un châssis (16a) du module détachable (16) est fixé de manière directe et détachable à une surface côté arrière du châssis (14a) du module de corps principal (14) ;
la calandre comprenant en outre :
un module de base (18) qui fixe de manière directe et détachable le module de corps principal (14) sur une surface supérieure et comporte un rail commun (18a) qui s'étend horizontalement vers l'arrière du module de base (18) ;
un module de refroidissement (20) pour refroidir le film de résine (2) à l'arrière du module de corps principal (14) ;
un module d'enroulement (22) pour enrouler le film de résine (2) à l'arrière du module de refroidissement (20) ; et
un module d'extrusion (10) qui est fixé de manière directe et détachable à une surface côté arrière du châssis (12a) du module à deux rouleaux (12) et qui malaxe et extrude le matériau résineux (1),
dans laquelle un châssis (20a) du module de refroidissement (20) et un châssis (22a) du module d'enroulement (22) sont fixés de manière à se déplacer et à être attachés et détachés d'une surface supérieure du module de base (18) le long du rail commun (18a).

2. Calandre d'essai selon la revendication 1, comprenant en outre :
un module d'estampage (24) pour appliquer un motif au film de résine (2) ;
un module de rognage (26) pour découper une extrémité du film de résine (2) ; ou
un module de recuit (30) pour éliminer une distorsion du film de résine (2),
dans laquelle chaque châssis (24a, 26a, 30a) du module d'estampage (24), du module de rognage (26) et du module de recuit (30) est fixé de manière à se déplacer sur et à s'attacher ou détacher de la surface supérieure du module de base (18) le long du rail commun (18a).

3. Calandre d'essai selon la revendication 1, comprenant en outre :
une matrice en T (11) qui est fixée de manière directe et détachable à une surface côté avant d'un châssis (10a) du module d'extrusion (10) et configurée pour alimenter le matériau résineux malaxé (1) vers le bas.

4. Calandre d'essai selon la revendication 1, comprenant en outre :
un module de déroulement (28) qui est fixé de manière directe et détachable à une surface côté avant du châssis (14a) du module de corps principal (14) et configuré pour dérouler un deuxième film de résine (2) vers le module de corps principal (14).

5. Calandre d'essai selon l'une quelconque des revendications 1 à 4,
dans laquelle chacun des modules (12, 14, 16, 20, 22) comprend des unités d'entraînement direct respectives qui sont montées directement sur les châssis respectifs (12a, 14a, 16a, 20a, 22a).
